# EUROPEAN PATENT APPLICATION

(11) **EP 4 733 110 A1**
(43) Date of publication of application: **29.04.2026**
(21) Application number: 25211490.5
(22) Date of filing: 27.10.2025
(51) Int. Cl.: B60K 11/04, B60K 11/08

(54) **ROAD VEHICLE WITH A CONVEYOR GROUP TO CONVEY THE AIR EXITING THE RADIATOR**

(30) Priority: 28.10.2024 IT 202400024060
(71) Applicant: FERRARI S.p.A., 41100 Modena (IT)
(72) Inventor: MILANETTI, Marco, 41100 MODENA (IT); PAOLINI, Andrea, 41100 MODENA (IT)
(74) Representative: Studio Torta S.p.A.

(57) **Abstract**

A road vehicle comprising a radiator having a first face facing outwards from the vehicle and an opposite second face facing inwards from the vehicle such that during the motion of the vehicle there is a flow of air passing through the radiator from the outside to the inside of the vehicle to allow heat to pass from a hot fluid circulating in the radiator to the flow of air passing through the radiator; wherein downstream of the radiator, the road vehicle comprises a conveyor group configured to convey the flow of air exiting the second face of the radiator into two air evacuation circuits respectively configured to evacuate the air at different positions of the vehicle.

## Description

### CROSS-REFERENCE TO RELATED APPLICATIONS

This patent application claims priority from Italian patent application no. 102024000024060 filed on October 28, 2024, the entire disclosure of which is incorporated herein by reference.

### Technical field of the invention

The present invention concerns a road vehicle. In particular, the present invention concerns a road vehicle comprising a radiator having a first face facing outwards from the vehicle and a second opposite face facing inwards from the vehicle such that during the motion of the vehicle there is a flow of air passing through the radiator from the outside towards the inside of the vehicle to allow heat to pass from a hot fluid circulating in the radiator to the flow of air passing through the radiator. In this context the present invention will address the problem of management and disposal of the air exiting the second face of the radiator.

### State of the art

As known, a road vehicle comprises a front bonnet connected at the top to the windscreen and at the bottom to the car floor. The type of vehicle relating to the present invention comprises a radiator arranged at the front portion of the bonnet so that during the motion of the vehicle there is a flow of air passing through the radiator from the outside towards the inside of the vehicle to allow heat to pass from a hot fluid circulating in the radiator to the flow of air passing through the radiator. A person skilled in the art is familiar with the radiator component, namely how it is structured and where it is housed in the vehicle, and therefore no further introductory details are necessary. Downstream of the radiator the air is currently conveyed along an evacuation or discharge circuit configured to convey the air from substantially below the bonnet to a point of the vehicle at which it is discharged into the external environment. The position of the air discharge point, namely where the air leaves the vehicle, impacts the dynamics and some parameters of interest of the vehicle. In particular, different discharge points correspond to different effects on the parameters of interest of the vehicle. For this reason currently it is common practice to establish at the design stage, based on the type of vehicle, where to arrange the discharge point, preferring some parameters to others. Essentially, at the design stage it is currently necessary to choose whether to prioritize the aerodynamic performance of the vehicle to the detriment of other parameters and vice versa. Currently the known art offers two different solutions, namely two different discharge points of the air exiting the radiator. The hot air coming from the radiators is usually evacuated in aerodynamically critical areas of the vehicle such as the wheel arch to prevent the air flow impacting the windscreen or the passenger compartment, thus reducing the thermal comfort of the occupants. Alternatively, in some solutions for optimizing the aerodynamic efficiency, the air flow is conveyed above the bonnet and the windscreen, accepting the above-mentioned thermal drawbacks in the passenger compartment.

### Object and summary of the invention

With reference to the known art, according to the present invention a vehicle is proposed as claimed in the attached claims in order to make the vehicle more flexible by not providing one single static discharge point for the air exiting the radiator.

The starting point for the present invention is a road vehicle comprising a radiator having a first face facing outwards from the vehicle and a second opposite face facing inwards from the vehicle such that during the motion of the vehicle there is a flow of air passing through the radiator from the outside towards the inside of the vehicle to allow heat to pass from a hot fluid circulating in the radiator to the flow of air passing through the radiator. In this context the present invention provides the vehicle with a conveyor group downstream of the radiator, configured to convey the air flow exiting the second face of the radiator into two evacuation circuits respectively configured to evacuate the air in different positions of the vehicle so as to maximize, on a time by time basis, different parameters of interest.

Preferably, the two circuits are configured to be opened and closed independently of each other thus allowing the following four configurations to be achieved:
- only the first of the two circuits is open;
- only the second of the two circuits is open;
- both circuits are open;
- both circuits are closed.

Furthermore, even more preferably, the two circuits can be partially opened to realize a plurality of different opening configurations.

Preferably, the parameters of interest which the present invention selectively optimizes, unlike the known art where only one parameter is always prevalent, are the aerodynamic performance and the thermal performance in terms of comfort of the vehicle occupants. In this sense the vehicle comprises a bonnet which houses the radiator and the conveyor group in which the bonnet is connected at the top to a windscreen and at the bottom to a car floor. The two circuits are configured to evacuate the air respectively at the bonnet, so that the air is evacuated externally along the windscreen and the aerodynamic performance is optimized to the detriment of the performance in terms of thermal comfort of the vehicle occupants, and at the car floor, so that the air is evacuated externally along the floor, optimizing performance in terms of thermal comfort of the vehicle occupants to the detriment of the aerodynamic performance.

Preferably, the passage from one configuration to the other is automatic and is controlled by a control unit based on some vehicle status parameters. Alternatively the passage can be controlled directly by the driver.

According to a construction example which will also be described below and shown in the figures, the conveyor group comprises a box body closed at the front by the radiator and configured to provide a receiving chamber for receiving the air exiting the second face of the radiator. In this example the box body comprises two walls provided with fins which are movable between a first configuration in which they allow the air flow to exit the box body along a corresponding evacuation circuit and a second configuration in which they block the air flow inside the box body. Therefore in this example the two circuits in practice comprise the same storage chamber, which can be open on two opposite sides beyond which the exiting air is directed towards different discharge points, preferably at the bonnet of the vehicle and the floor of the vehicle as described previously.

### Brief description of the drawings

For a better understanding of the present invention, an embodiment thereof is now described, purely by way of nonlimiting example, with reference to the attached drawings, in which:
- figure 1 is a schematic view of a portion of the vehicle to indicate the components relating to the present invention;
- figures 2 and 3 are schematic views of two different solutions now available in which each solution maximizes a parameter of interest to the detriment of others;
- figures 4 and 5 are views of a conveyor group according to the present invention able to selectively offer two different discharge points of the air exiting the radiator such as to make the car flexible, maximizing different parameters of interest as required;
- figures 6-8 are views in which the conveyor group of figures 4 and 5 is in a first configuration to discharge the air exiting from the radiator at the bonnet;
- figures 9-11 are views in which the conveyor group of figures 4 and 5 is in a second configuration for discharging the air exiting the radiator at the car floor.

### Preferred embodiments of the invention

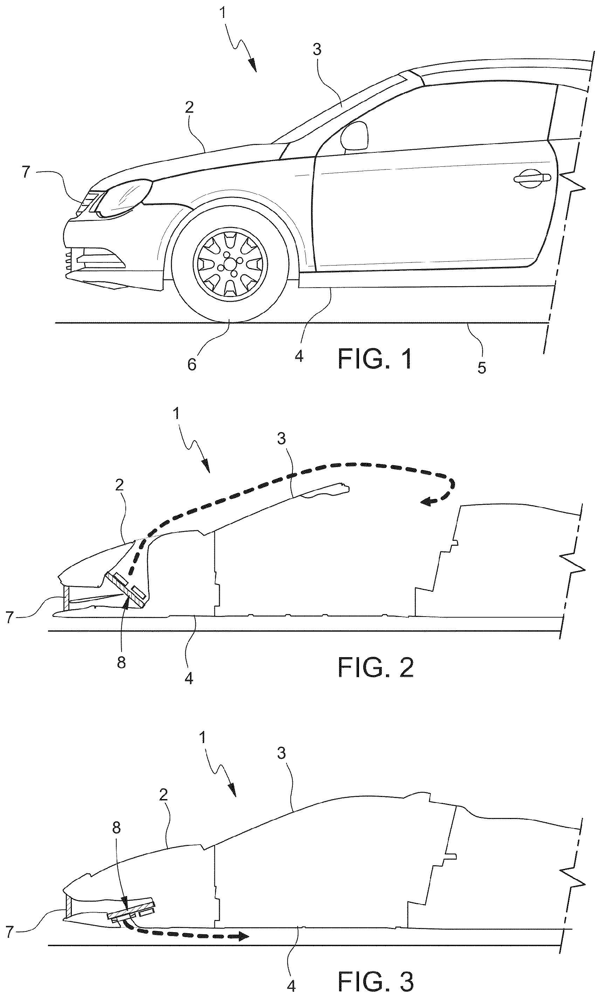

Figure 1 is a schematic view of a portion of a vehicle 1. Said figure 1 illustrates some components relating to the present invention. In particular, figure 1 shows a vehicle 1 with a bonnet 2, a windscreen 3 located downstream of the bonnet 2, a car floor 4 which from below the bonnet 2 extends along the vehicle parallel to the ground 5, a wheel 6 and a radiator grille 7. A radiator 8 is housed in the bonnet 2 substantially behind the radiator grille 7. As known, the radiator 8 has a first face facing the outside of the vehicle 1 and a second opposite face facing the inside of the vehicle 1 so that during the motion of the vehicle there is a flow of air passing through the radiator from the outside towards the inside of the vehicle 1 to allow heat to pass from a hot fluid circulating in the radiator to the flow of air passing through the radiator 8.

Figures 2 and 3 are schematic views of two different solutions currently available for evacuating the air that has passed through the radiator 8 and from the inside of the bonnet 2 has to be discharged towards the outside. Figure 2 shows a solution in which downstream of the radiator 8 is an evacuation circuit configured to guide the air from the radiator 8 to a discharge point provided on the bonnet 2. As schematized in figure 2 in said configuration, at the top, the air flow laps the bonnet 2 and the windscreen 3. Said configuration on the one hand maximizes the aerodynamic effect and on the other penalizes the thermal comfort of the vehicle occupants because the hot air could create condensation on the windscreen 3 and possibly also penetrate into the passenger compartment (in particular in the case of roadsters and similar). Figure 3 shows a different solution in which downstream of the radiator 8 there is an evacuation circuit configured to guide the air from the radiator 8 to a discharge point provided on the car floor 4. As schematized in figure 3 in said configuration, at the bottom, the air flow laps the car floor 4. Said configuration on the one hand maximizes the thermal comfort of the vehicle occupants because the hot air is kept well away from the passenger compartment, but it penalizes the aerodynamic effect. In other words, each solution in the art maximizes a parameter of interest to the detriment of others and the choice is defined in a non-modifiable manner at the design stage.

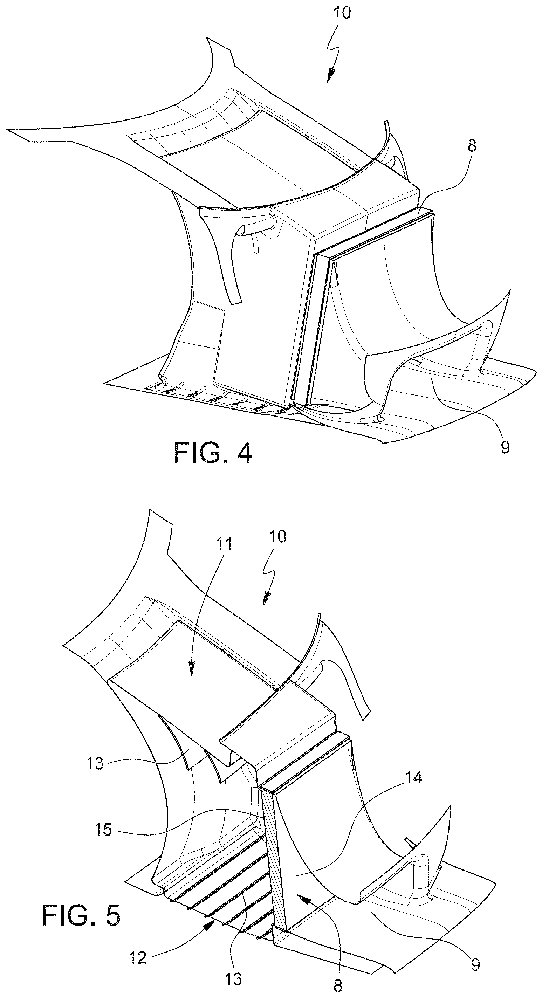

Figures 4 and 5 are views of an example of a conveyor group according to the present invention which is able to offer, as required, one, none or two different discharge points of the air exiting the radiator so as to make the car flexible, maximizing different parameters of interest according to the situation. Figure 4 shows a view in which the radiator 8 positioned between an air inlet channel 9 and a box body 10 can be identified. In particular, the box body 10 is closed at the front by the radiator 8 and, as can be seen in figure 5, the box body 10 is provided with an upper wall 11 and a lower wall 12 equipped with fins 13 movable between a first configuration in which they allow the flow of air to exit the box body 10 along a corresponding discharge circuit and a second configuration in which they block the air flow inside the box body. The fins 13 of both the walls 11 12 are movable in an independent manner to achieve the following four configurations:
- only the fins 13 of the upper wall 11 are open;
- only the fins 13 of the lower wall 12 are open;
- the fins 13 of the lower wall 12 and of the upper wall 11 are open;
- the fins 13 of the lower wall 12 and of the upper wall 11 are closed.

The movement of the fins from open to closed and vice versa can be automatically controlled by a control unit based on some vehicle status parameters or can be manual, namely controlled by the driver.

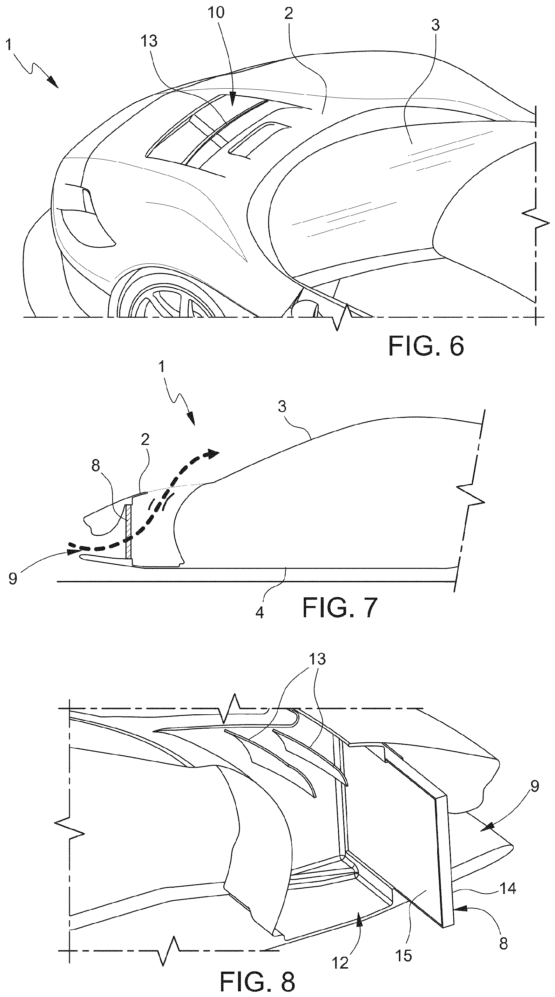

Figures 6-8 are views in which the conveyor group of figures 4 and 5 is in a first configuration to discharge the air exiting the radiator 8 at the bonnet 2. In particular, figures 6 and 8 show how the fins 13 of the upper wall 11 are open and those of the lower wall 12 are closed, thus allowing the air to discharge only at the bonnet 2 (as can also be seen from the drawing of figure 7).

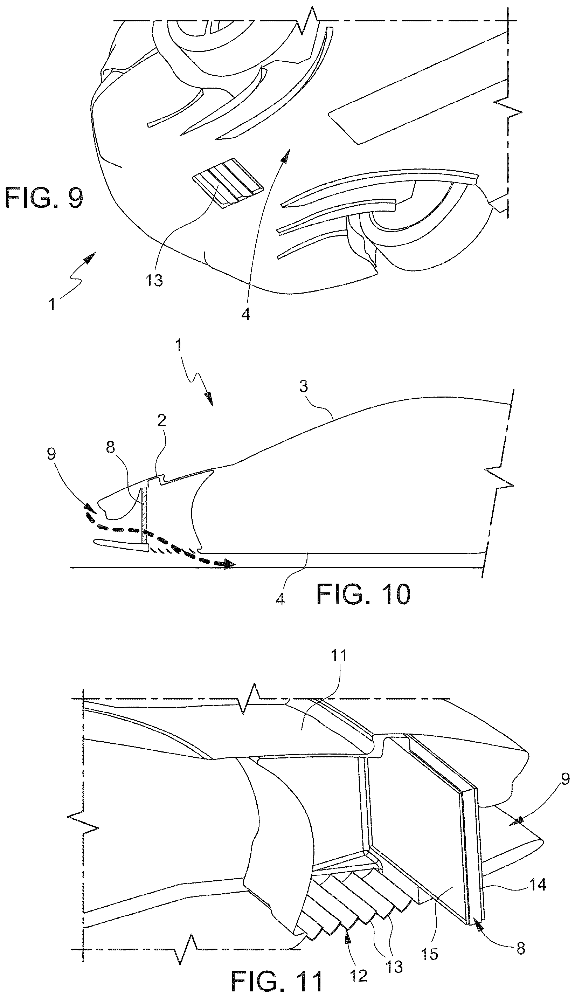

Figures 9-11 are views in which the conveyor group of figures 4 and 5 is a second configuration for discharging the air exiting the radiator 8 at the car floor 4. In particular, figures 9 and 11 show how the fins 13 of the upper wall 11 are closed and those of the lower wall 12 are open, thus allowing the air to discharge only at the car floor 4 (as can also be seen from the drawing of figure 10).

Lastly, it is clear that modifications and variations can be made to the embodiment of the invention described and illustrated here without departing from the protective scope of the present invention, as defined in the attached claims.

## Claims

1. Road vehicle (1) comprising a radiator (8) having a first face (14) facing outwards from the vehicle and an opposite second face (15) facing inwards from the vehicle (1) such that during the motion of the vehicle (1) there is a flow of air passing through the radiator (8) from the outside to the inside of the vehicle (1) to allow heat to pass from a hot fluid circulating in the radiator to the flow of air passing through the radiator (8);
**characterised in that** downstream of the radiator (8), the road vehicle comprises a conveyor group (10) configured to convey the flow of air exiting the second face (15) of the radiator (8) into two air evacuation circuits respectively configured to evacuate the air at different positions of the vehicle (1).

2. Vehicle as claimed in claim 1, in which the two evacuation circuits are configured to be opened and closed independently in such a way as to achieve the following four configurations:
- only the first of the two circuits is open;
- only the second of the two circuits is open;
- both circuits are open;
- both circuits are closed.

3. Vehicle as claimed in claim 2, wherein the two circuits can be partially opened to realise a plurality of different opening configurations.

4. Vehicle as claimed in any one of the preceding claims, wherein the two circuits are configured to evacuate the air at different positions of the vehicle respectively to maximise different parameters of interest.

5. Vehicle as claimed in any one of the preceding claims, wherein the vehicle (1) comprises a bonnet (2) housing the radiator (8) and the conveyor group (10); the bonnet (2) being connected at the top to a windscreen (3) and at the bottom to a car floor (4); the two circuits being configured to evacuate the air respectively at the bonnet (2), so that the air is evacuated externally along the windscreen and the aerodynamic performance is optimised to the detriment of the thermal performance of comfort of the occupants of the vehicle (1), and at the car floor (4), so that the air is evacuated externally along the car floor, optimising the thermal performance of comfort of the occupants of the vehicle (1) to the detriment of the aerodynamic performance.

6. Vehicle as claimed in any one of the preceding claims 2 to 5, wherein the change from one configuration to the other is performed in an automatic manner controlled by a control unit on the basis of some vehicle state parameters (1) or can be performed in a manual manner controlled by the driver.

7. Vehicle as claimed in any one of the preceding claims, wherein the conveyor group (10) comprises a box body frontally closed by the radiator (8) and configured to realize a chamber receiving the air exiting the second face (15) of the radiator (8); the box body comprising two walls (11, 12) provided with fins (13) movable between a first configuration in which they allow air flow to exit the box body (10) along a corresponding evacuation circuit and a second configuration in which they block air flow within the box body (10).

8. Vehicle as claimed in claim 7, wherein the walls (11, 12) of the box body (10) provided with the movable fins (13) are an upper wall configured to evacuate air at the bonnet (2) of the vehicle (1) and a lower wall (12) configured to evacuate at the car floor (4) of the vehicle (1).
